# EUROPEAN PATENT APPLICATION

(11) **EP 2 543 641 A1**
(43) Date of publication of application: **09.01.2013**
(21) Application number: 11172848.1
(22) Date of filing: 06.07.2011
(51) Int. Cl.: C02F 1/20, C02F 1/66, C01C 1/18, C05F 3/00, C02F 101/16, C02F 103/20

(54) **A method and a device for taking care of nitrogen present in a liquid**

(71) Applicant: Biotain AB, 262 73 Ängelholm (SE)
(72) Inventor: Ewers, Per, SE-255 91 Helsingborg (SE)
(74) Representative: Olsson, Jan

(57) **Abstract**

A method for taking care of nitrogen present in a liquid obtained by at least rough-filtrating a sludge comprises the steps of increasing the pH value of said liquid to be ≥ 10 by making additions thereto, withdrawal of ammonia gas from said liquid and conducting said ammonia gas into a solution containing calcium nitrate so as to form at least ammonium nitrate therein.

## Description

### TECHNICAL FIELD OF THE INVENTION AND BACKGROUND ART

The present invention relates to a method and a device for taking care of nitrogen present in a liquid obtained by at least rough-filtrating a sludge.

Said sludge may be of any conceivable type having a nitrogen content, but a sludge in the form of cattle droppings and sewage sludge may be mentioned as typical examples without restricting the invention thereto.

Such a method and device are used for protecting the environment against the harmful impact said nitrogen would have thereupon should it be discharged in nature, such as in lakes or other waters. Another object of taking care of said nitrogen is to be able to utilize it for fertilizing purposes where this is desired.

It is of course a desire to take care of nitrogen present in such a liquid in an advantageous way, especially with respect to the costs for carrying out such a method, including costs for agents used.

### SUMMARY OF THE INVENTION

The object of the present invention is to provide a method and a device being improved in at least some aspect with respect to such methods and devices already known.

This object is with respect to the method obtained by providing such a method, which comprises the steps of
a) increasing the pH value of said liquid to be ≥10 by making additions thereto,
b) withdrawal of ammonia gas from said liquid, and
c) conducting said ammonia gas into a solution containing calcium nitrate so as to form at least ammonium nitrate therein.

By increasing the pH value of said liquid to be ≥ 10 ammonia gas may efficiently be separated from the liquid. Furthermore, calcium nitrate is an agent that may be acquired to a comparatively low cost, which in combination with the value of ammonium nitrate, among others as fertilizer, may even result in a net income of the measures taken for removing the nitrogen from said liquid.

Another advantage of using calcium nitrate for taking care of said nitrogen present in said ammonia gas is that it is harmless to handle contrary to the use of different acids, such as sulphur acid, for forming a salt with nitrogen content, such as ammonium sulphate.

According to an embodiment of the invention said additions made in step a) comprises additions of NaOH.

According to another embodiment of the invention also carbon dioxide is in step b) withdrawn from said liquid. Carbon dioxide may be withdrawn at the same time as ammonia gas is withdrawn from a said liquid, and it may then in step c) also be conducted into said solution so as to form calcium carbonate in addition to said ammonium nitrate, which may find different uses, such as in the food industry.

According to another embodiment of the invention said withdrawal in step b) is obtained by generating a negative gas pressure in a casing containing said liquid. This results in an efficient withdrawal of the ammonia gas from said liquid.

According to another embodiment of the invention said generating of a negative gas pressure is combined with filtering of a said sludge by utilizing the gravitation for obtaining passing of said liquid as a part of said sludge through a filter surface inside said casing. A liquid having a low content of solid particles and from which ammonium gas may be efficiently withdrawn is in this way obtained by utilizing the gravitation for said filtering.

According to another embodiment of the invention said filtering in step b) is carried out in an arrangement comprising a said casing configured to receive a filter body having said filter surface while forming a filter space separating circumferential walls of the casing from the filter body, said casing and said filter body being configured to be arranged with their circumferential walls directed substantially vertically for obtaining filtration by means of the gravitation of a sludge fed from below into said filter space.

According to another embodiment of the invention a second liquid containing ammonia is in step b) sprayed onto a backside of a filter surface while bringing said liquid first mentioned to pass said filter surface inside said casing, which facilitates the release of ammonia gas from the liquid for said withdrawal.

According to another embodiment of the invention it is nitrogen present in a liquid emanating from cattle droppings that is taken care of. This means that nitrogen present in such a sludge may be taken care of in a favourable way. The same applies to the embodiment relating to taking care of nitrogen present in a liquid emanating from faeces possibly mixed with urine from animal or human, and especially nitrogen present in a liquid emanating from sewage from a water closet.

The object of the present invention is also obtained by providing a device which comprises means configured to make additions to said liquid so as to increase the pH value thereof to be ≥ 10, means configured to cause withdrawal of ammonia gas from said liquid and means configured to conduct said ammonia gas into a solution containing calcium nitrate so as to form at least ammonium nitrate therein. The advantages of such a device and of embodiments thereof appear clearly from the above discussion of the method according to the present invention.

Further advantages as well as advantageous features of the invention will appear from the following description.

### BRIEF DESCRIPTION OF THE DRAWINGS

With reference to the appended drawings, below follows a specific description of an embodiment of the invention cited as an example.

In the drawings:

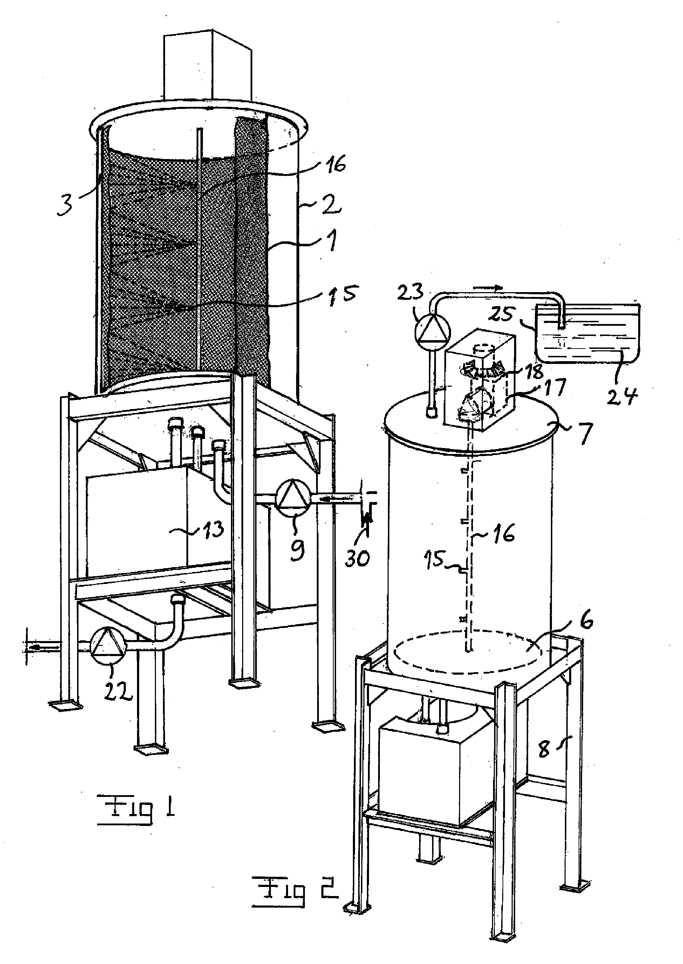

Figs 1-4 are simplified views schematically illustrating an arrangement for filtrating a rough-filtrated sludge, which may be used for carrying out a method according to the present invention.

### DETAILED DESCRIPTION OF AN EMBODIMENT OF THE INVENTION

An arrangement suitable to be used in connection with the method according to the invention for filtrating a rough-filtrated sludge is schematically illustrated in the appended Figures and will now be described while at the same time making reference to all these Figures. The arrangement has a filter body 1 with a tubular shape and a circular cross-section. The filter body is made of a net with a mesh size of 1 pm - 200 µm. The filter body is received in a casing 2 with a circular cross-section and co-axially arranged with respect to the filter body while forming a filter space 3 therebetween. The thickness of this filter space defined by circumferential walls 4 of the casing and the filter surface 5 of the filter body is typically 3-10 cm.

The casing and the filter body are configured to be arranged with their centre axis extending substantially vertically. Said filter space 3 is at one end closed by a bottom 6 of the casing and at the other of a top wall 7 of the casing. Diameter and height of the filter body and casing are typically about 1 m and 1.5 m, respectively, but may have any values suitable for the intended use.

The casing with the filter body is arranged on a frame 8 to be resting on the ground, such as the floor in a room.

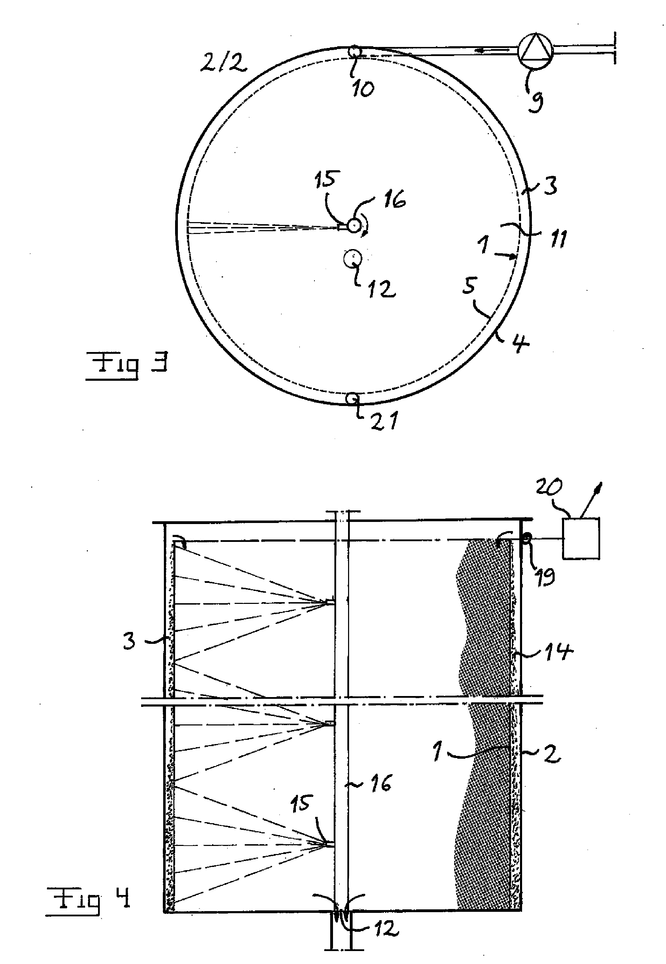

The arrangement also comprises means illustrated by a pump 9 configured to feed a sludge to be filtered from below through a hole 10 in the bottom of the casing into said filter space 3 (see Fig 3). This sludge should be rough-filtrated in the sense mentioned in the introduction and may be of any conceivable type and is here to be considered to emanate from cattle droppings or sewage sludge from water closets. This means that liquid substance of the sludge will by the gravitation pass through the filter surface 5 of the filter body into a central space 11 of the casing surrounded by the filter body and out through an opening 12 in the bottom 6 of the casing for being collected in a container 13. Sludge particles 14 being too large for passing through the filter body will be retained on the filter surface, and such particles are schematically illustrated in Fig 4.

The level of the sludge particles inside the filter surface will gradually increase, since the height to which the filter surface will be obstructed by sludge particles retained thereon will gradually increase.

The arrangement is also provided with a plurality of nozzles 15 arranged on a pipe 16 extending substantially along the centre axis of the casing. Means 17 are configured to feed a liquid to said nozzles for being sprayed onto the filter surface from the centre space of the casing for cleaning the filter surface. This may be done by spraying liquid deriving from the liquid substance obtained by passing through said filter surface of the filter body, but a second liquid containing ammonia is preferably sprayed onto a backside of the filter surface for reasons mentioned above. The arrangement comprises means in the form of a motor 18 configured to rotate the pipe 16 while spraying the liquid through the nozzles onto the filter body, so that the liquid will in this way be sprayed in substantially uniformly circumferentially distributed directions onto the inner surface of the filter body. This spraying facilitates the passing of clean liquid through the filter surface by capillary action.

The arrangement has also means 19 (see Fig 4) configured to detect if a determined height has been reached by sludge particles 14 retained in the filter surface 3 and send information thereabout to a member 20 configured to control the feeding means 9 to stop feeding a said sludge into the filter space when this determined height has been reached. The arrangement has means schematically indicated by a hole 21 in the bottom of the casing configured to enable removal of the retained particles after said stop of the feeding of the sludge to the filter space. The filter will after such removal be cleaned by spraying through the nozzles, whereupon the pump 9 may be controlled to start to feed a said sludge to the filter surface again for filtrating thereof. It is shown that the arrangement also has means 22 for pumping the liquid collected in the container 13 away therefrom for further treatment or for being used in the spraying action of the nozzles 15.

It is shown in Fig 2 how the arrangement also has means 23, such as a fan, configured to create a negative gas pressure inside the casing 2 for removal of gas contained in the sludge through a top wall 7 of the casing. This gas may then be conducted into a solution 24 in a vessel 25 for taking care thereof. For taking care of nitrogen present in said sludge in accordance with the present invention the pH value of the sludge is increased before pumping it into said filter space 3 to be ≥ 10 by making appropriate additions thereto (see means 30 indicated in Fig 1), such as adding NaOH thereto. This will then result in formation of ammonia gas in the interior of the casing, which may be withdrawn by said means 23 and conducted into a solution 24 containing calcium nitrate so as to form ammonium nitrate therein. Also carbon dioxide formed in said casing may then be withdrawn and conducted into the solution 24 so as to form calcium carbonate in addition to said ammonium nitrate therein.

The invention is of course not in any way restricted to the embodiments thereof described above, but many possibilities to modifications thereof will be apparent to a person with ordinary skill in the art without departing from the scope of the invention as defined in the appended claims.

The pH value may be increased by making other additions to said liquid than sodium hydroxide. These additions may be made to said liquid before a filtrating step, after which said withdrawal is taking place, or after said filtrating step.

## Claims

1. A method for taking care of nitrogen present in a liquid obtained by at least rough-filtrating a sludge, comprising the steps of
a) increasing the pH value of said liquid to be ≥ 10 by making additions thereto,
b) withdrawal of ammonia gas from said liquid, and
c) conducting said ammonia gas into a solution containing calcium nitrate so as to form at least ammonium nitrate therein.

2. A method according to claim 1, **characterized in that** said additions made in step a) comprises additions of NaOH.

3. A method according to claim 1 or 2, **characterized in that** in step b) also carbon dioxide is withdrawn from said liquid.

4. A method according to claim 3, **characterized in that** in step c) also said carbon dioxide withdrawn from said liquid is conducted into said solution so as to form calcium carbonate in addition to said ammonium nitrate.

5. A method according to any of the preceding claims, **characterized in that** said withdrawal in step b) is obtained by generating a negative gas pressure in a casing (2) containing said liquid.

6. A method according to claim 5, **characterized in that** said generating of a negative gas pressure is combined with filtering of a said sludge by utilizing the gravitation for obtaining passing of said liquid as a part of said sludge through a filter surface (5) inside said casing (2).

7. A method according to claim 6, **characterized in that** in step b) said filtering is carried out in an arrangement comprising a said casing (2) configured to receive a filter body (1 ) having said filter surface (5) while forming a filter space (3) separating circumferential walls (4) of the casing from the filter body, said casing and said filter body being configured to be arranged with their circumferential walls directed substantially vertically for obtaining filtration by means of the gravitation of a sludge fed from below into said filter space (3).

8. A method according to any of claims 5-7, **characterized in that** in step b) a second liquid containing ammonia is sprayed onto a backside of a filter surface while bringing said liquid first mentioned to pass said filter surface inside said casing.

9. A method according to any of the preceding claims, **characterized in that** it is nitrogen present in a liquid emanating from cattle droppings that is taken care of.

10. A method according to any of claims 1-8, **characterized in that** it is nitrogen present in a liquid emanating from faeces possibly mixed with urine from animal or human that is taken care of.

11. A method according to claim 10, **characterized in that** it is nitrogen present in a liquid emanating from sewage from a water closet that is taken care of.

12. A device for taking care of nitrogen present in a liquid obtained by at least rough-filtrating a sludge, **characterized in that** it comprises means (30) configured to make additions to said liquid so as to increase the pH value thereof to be ≥ 10, means (23) configured to cause withdrawal of ammonia gas from said liquid and means (24) configured to conduct said ammonia gas into a solution containing calcium nitrate so as to form at least ammonium nitrate therein.

13. A device according to claim 12, **characterized in that** said withdrawal means comprises means (23) configured to generate a negative gas pressure in a casing containing said liquid of which the pH value has been increased.
